# EUROPÄISCHE PATENTSCHRIFT

(11) **EP 1 294 561 B1**
(45) Veröffentlichungstag und Bekanntmachung des Hinweises auf die Patenterteilung: **06.04.2005**
(21) Anmeldenummer: 01955215.7
(22) Anmeldetag: 15.06.2001
(51) Int. Cl.: B32B 21/00, B32B 23/00, B32B 27/00, C08G 12/40

(54) **FASERVERBUNDE HOHER DIMENSIONSSTABILITÄT, BEWITTERUNGSRESISTENZ UND FLAMMFESTIGKEIT**
FIBRE COMPOSITES WITH EXCELLENT DIMENSIONAL STABILITY, WEATHER RESISTANCE AND FLAMEPROOFING PROPERTIES
COMPOSITES FIBREUX PRESENTANT UNE STABILITE DIMENSIONNELLE, UNE RESISTANCE AUX INTEMPERIES ET UNE RESISTANCE A LA FLAMME ELEVEES

(30) Priorität: 21.06.2000 DE 10030563
(43) Veröffentlichungstag der Anmeldung: 26.03.2003
(73) Patentinhaber: AMI Agrolinz Melamine International GmbH, 4020 Linz (AT)
(72) Erfinder: BUCKA, Hartmut, Eggenddorf (AT); RÄTZSCH, Manfred, A-4062 Wilhering (AT); MÜLLER, Uwe, A-4222 Luftenberg (AT)
(74) Vertreter: Gross, Felix, Dr.
(86) Internationale Anmeldenummer: PCT/DE2001/002221
(87) Internationale Veröffentlichungsnummer: WO 2002/000429

(56) Entgegenhaltungen:
- EP-A- 0 262 518
- US-A- 4 871 596
- US-A- 5 206 066

## Beschreibung

Die Erfindung betrifft Faserstoffe und Duroplaste enthaltende Faserverbunde hoher Dimensionsstabilität, Bewitterungsresistenz und Flammfestigkeit sowie ein Verfahren zu deren Herstellung

Faserverbunde aus Polyacrylnitril-Fasern und Melaminharzen (JP 97 158 027) sind bekannt. Von Nachteil bei diesen Verbunden ist die aufwendige mechanische Nachverarbeitung der ausgehärteten Halbzeuge.

Weiterhin ist bekannt, Baumwollgewebe zur Verbesserung der Bewitterungsresistenz [St. Mard, S., Amer. Dyest. Rep. 55(1966)25, 1046-1049] und Flammfestigkeit [St. Mard, J. fire retard. Chem. 5(1978)4, 174-182] mit Melaminharzen zu imprägnieren. Bekannt ist ebenfalls die Imprägnierung von Vliesen mit Mischungen aus Polyestern und Melaminharzen (JP 99 124 469). Die Flammfestausrüstung [US 4 839 099] und die Verbesserung der Bewitterungsresistenz von Holz [ Rapp, A., Holz Roh-Werkst. 57(1999)5, 331-339] durch Beschichtung mit Melaminharzen ist ebenfalls bekannt.

Ziel der Erfindung sind Faserverbunde aus Faserstoffen und/oder Holzpartikeln, die durch eine formgebende Verarbeitung hergestellt werden können und eine hohe Dimensionsstabilität, Bewitterungsresistenz und Flammfestigkeit bei niedrigen Harzanteilen besitzen

Die erfindungsgemässe Aufgabe wurde durch Faserverbunde hoher Dimensionsstabilität, Bewitterungsresistenz und Flammfestigkeit mit semiinterpenetrierender Netzwerkstruktur gelöst, wobei die Faserverbunde erfindungsgemäss aus
a) 60 bis 95 Masse% Faserstoffen und/oder Holzpartikeln,
b) 5 bis 40 Masse% hydrophobierten Melaminharzen,
c) gegebenenfalls 1 bis 15 Masse% nichthydrophobierten Melaminharzen, und
d) gegebenenfalls 1 bis 30 Masse% Füllstoffen
bestehen und nach einem Verfahren hergestellt worden sind, bei dem
- in der ersten Verfahrensstufe Faserstoffe und/oder Holzpartikel, gegebenenfalls unter Zusatz von 5 bis 40 Masse%, bezogen auf die Faserstoffe und/oder Holzpartikel, einer wässrigen Dispersion von Melaminharz-Nanopartikeln und/oder Füllstoffen mit einem Feststoffanteil von 60 bis 90 Masse%, auf einen Restwassergehalt von 0,5 bis 5 Masse% getrocknet worden sind,
- in der zweiten Verfahrensstufe die getrockneten und gegebenenfalls mit Melaminharz-Nanopartikeln und/oder Füllstoffen modifizierten Faserstoffe und/oder Holzpartikel einer Sorption von 8 bis 90 Masse%, bezogen auf die Faserstoffe und/oder Holzpartikel, einer nichtwässrigen ammoniakalischen Dispersion bzw. Lösung eines hydrophobierten Melaminharzvorkondensats mit einem Feststoffanteil von 20 bis 80 Masse% an modifizierten Melaminharzvorkondensaten mit Molmassen-Zahlenmitteln von 200 bis 5000, die zusätzlich 5 bis 50 Masse%, bezogen auf die modifizierten Melaminhamrorkondensate, gekoppelte Blöcke aus Polyacrylaten oder modifizierten Maleinsäureanhydridcopolymeren oder ungesättigten Polyestern oder Polyetherurethanen enthalten, unterzogen wurden, wobei bei der Sorption 0,05 bis 2,0 Masse%, bezogen auf die hydrophobierten Melaminharzvorkondensate, latente Härter für Verarbeitungstemperaturen oberhalb 130°C zugesetzt worden sind, und die plastische Reaktionsmischung nach Entgasung der flüchtigen Komponenten bei Temperaturen unterhalb 100°C als Strang oder Rohfolie ausgetragen und auf Raumtemperatur abgekühlt worden ist,
- in der dritten Verfahrensstufe entweder die als Strang ausgetragene und granulierte Reaktionsmischung einer Extrusionsverarbeitung zu Halbzeugen oder einer Spritzgussverarbeitung zu Formstoffen bei Verarbeitungstemperaturen bis 200°C unter Aushärtung des Faserverbunds, oder die als Rohfolie ausgetragene Reaktionsmischung einer Nachverarbeitung durch Pressen oder Kalandrieren bei Verarbeitungstemperaturen bis 180°C unter Aushärtung des Faserverbunds, unterzogen worden ist.

Bevorzugt sind die Faserstoffe in den erfindungsgemässen Faserverbunden native Faserstoffe, insbesondere Holzfasern, Kokosnussfasern, Papierfasem, Viscosefasern sowie Fasem aus Baumwolle, Flachs, Hanf, Jute und/oder Kenaf, anorganische Faserstoffe, insbesondere Basaltfasern, Glasfasern, Magnesiumoxysulfatfasern und/oder Stahlfasern, und/oder Synthesefasern, insbesondere Kohlenstofffasern sowie Fasern aus flüssigkristallinen Polymeren, Melamin-Formaldehyd-Harzen, Polyamiden, Polyimiden, Polyacrylnitril, Polyethylenterephthalat, Poly(methylsilylsesquioxan), Polypropylen, Polytetrafluorethylen, Polyurethan, Polyvinylalkohol und/oder syndiotaktisches Polystyren.

Es ist von Vorteil, Faserstoffe einzusetzen, die zur Verbesserung der Verträglichkeit mit den Melaminharzen eine Beschichtung mit Haftvermittlem enthalten. Beispiele für Haftvermittler für anorganische Faserstoffe sind Aminosilane oder Polyalkylenoxide. Für Kohlenstofffasern sind niedermolekulare Epoxidharze als Haftvermittler geeignet. Beispiele für Haftvermittler für Polypropylenfasern sind Acrylsäure- oder Maleinsäureanhydrid-modifizierte Polypropylene

Die in den Faserverbunden enthaltenen hydrophobierten Melaminharze sind bevorzugt Melamin-Formaldehyd-Harze, Melamin-Phenol-Formaldehyd-Harze und/oder Melamin-Harnstoff-Formaldehyd-Harze, bei denen 20 bis 100 mol% der Methylolgruppen durch Umsetzung mit C₁- bis C₄-aliphatischen Alkoholen, Polyalkylenoxiden mit Molmassen von 500 bis 2500 und/oder C₅-C₁₂-(Meth)acrylsäurehydroxyalkyestem veräthert und/oder durch Umsetzung mit ungesättigten Säureamiden vom Typ Acrylamid oder Methacrylamid modifiziert worden sind, und wobei die modifizierten Melaminharze einer Umsetzung mit modifizierten Maleinsäureanhydridcopolymeren, ungesättigten Polyestern, Polyetherurethanen und/oder Polyacrylaten zugrundeliegenden Acrylatmonomermischungen, unterzogen worden sind.

Die Melamin-Formaldehyd-Harze, Melamin-Phenol-Formaldehyd-Harze und/oder Melamin-Hamstoff-Formaldehyd-Harze in den hydrophobierten Melaminharzen können als Melaminkomponente ebenfalls 0,1 bis 80 Masse% Melaminderivate und/oder Triazinderivate wie 2-(2-Hydroxyethyl-amino)-4,6-diamino-1,3,5-triazin, 2-(5-Hydroxy-3-oxa-pentylamino)-4,6-diamino-1,3,5-triazin, 2,4,6-Tris-(6-aminohexylamino)-1,3,5-triazin, 2,4-(Di-5-hydroxy-3-oxapentylamin)-6-methyl-1,3,5-triazin, Ammelin und/oder Melamin-Formaldehyd-Alkoholate von C₁-C₈-Alkoholen enthalten.

Beispiele für geeignete Acrylatmonomermischungen, die durch Polymerisation zu Polyacrylaten als Blöcke in die hydrophobierte Melaminharzkomponente der Faserverbunde eingebaut sind, sind Monomermischungen aus Acrylamid/Methylmethacrylat/Ethylacrylat/2-Hydroxyethylmethacrylat, Styren/Methylmethacrylat/Hydroxyethylmethacrylat/2-Ethylhexylacrylat, oder Methacrylamid/Butylacrylat/Butylmethacrylat/Ethylhexylmethacrylat/Hydroxyethylmethacrylat/Methylmethacrylat/Styren.

Beispiele für geeignete modifizierte Maleinsäureanhydrid-Copolymere, die als Blöcke in die hydrophobierte Melaminharzkomponente der Faserverbunde eingebaut sind, sind Maleinsäureanhydrid-Styren-Copolymere, die mit Polyalkylenoxiden, langkettigen Alkylaminen oder langkettigen Hydroxyalkylaminen modifiziert sind.

Beispiele für geeignete ungesättigte Polyester, die als Blöcke in die hydrophobierte Melaminharzkomponente der Faserverbunde eingebaut sind, sind Polyester auf Basis Adipinsäure, Maleinsäureanhydrid, Diethylenglycol und Neopentylglycol oder Polyester auf Basis von Phthalsäureanhydrid, Maleinsäureanhydrid, Diethylenglycol und Ethylenglycol.

Beispiele für geeignete Polyetherurethane sind Polyurethane mit Polytetrahydrofuran-Blöcken als Polyetherkomponente.

Beispiele für die in den Faserverbunden gegebenenfalls enthaltenen nichthydrophobierten Melaminharze sind Melamin-Formaldehyd-Harze, Melamin-Phenol-Formaldehyd-Harze und/oder Melamin-Hamstoff-Formaldehyd-Harze, in denen als Melaminkomponente ebenfalls 0,1 bis 80 Masse% Melaminderivate und/oder Triazinderivate wie 2-(2-Hydroxyethyl-amino)-4,6-diamino-1,3,5-triazin, 2-(5-Hydroxy-3-oxapentylamino)-4,6-dia-mino-1,3,5-triazin, 2,4,6-Tris-(6-aminohexylamino)-1,3,5-triazin, 2,4-(Di-5-hydroxy-3-oxapentylamin)-6-methyl-1,3,5-triazin und/oder Ammelin enthalten sein können.

Bevorzugt enthalten die hydrophobierten und/oder nichthydrophobierten Melaminharze einkondensierte Mono- und/oder Diester der Phosphorsäure bzw. phosphorigen Säure und/oder Ammoniumpolyphosphate. Geeignete Phosphorylierungsmittel, die bei der Modifizierung der Melaminharze eingesetzt werden können, sind Diphenylphosphat, Dimethylphosphit, Diethylphosphit, Phosphorsäurediethylesterchlorid, Thiophosphorsäurediethylesterchlorid und Di-2-(ethylhexyl)hydrogenphosphat.

Beispiele für die in den Faserverbunden gegebenenfalls enthaltenen Füllstoffe sind Al₂O₃, Al(OH)₃, Bariumsulfat, Calciumcarbonat, Glaskugeln, Kieselerde, Mikrohohlkugeln, Ruß und/oder Talkum.

Bevorzugte Füllstoffe sind nanoskalige Füllstoffe mit Partikelgrössen von 1 bis 100 nm, besonders bevorzugt quellbare Füllstoffe vom Typ hydrophile synthetische Kieselsäuren, Calciumcarbonat, Calciummetasilikate, Schichtsilikate vom Typ Montmorillonit und/oder Metalloxide wie ZnO, SnO, Al₂O₃ oder TiO₂.

Beispiele für weitere besonders bevorzugte Schichtsilicate vom Typ Montmorillonit sind Bentonit, Kaolinit, Muskovit, Hectorit, Fluarhectorit, Saponit, Beidelit, Nontronit, Stevensit, Vermiculit, Halloysit, Volkonskoit, Magadiit und Kenyalit.

Insbesondere werden quellbare nanoskalige Füllstoffe bevorzugt, die durch Sorption von Lösungen von Melaminharzvorkondensaten modifiziert sind.

Die gegebenenfalls als Melaminharzkomponente in den Faserverbunden enthaltenen Melaminharz-Nanopartikel bestehen aus hydrophobierten und/oder nichthydrophobierten Melaminharzen, wobei die Nanopartikeldispersionen nach einem Verfahren hergestellt worden sind, bei dem wässrige Lösungen von Melaminharzvorkondensate, gegebenenfalls unter hoher Scherwirkung, in eine Emulgator-freie wässrige Lösung, die saure Katalysatoren, und gegebenenfalls dispergierte flüchtige Kohlenwasserstoffe, Fluorkohlenwasserstoffe, Inertgase und/oder anorganische Carbonate enthält, eingetragen werden, und das Reaktionsgemisch nachfolgend verdünnt und ausgetragen wird. Enthält die Lösung unter hoher Scherwirkung dispergierte flüchtige Kohlenwasserstoffe, Fluorkohlenwasserstoffe, Inertgase und/oder anorganische Carbonate, so werden Melaminharz-Nanopartikel in Form von Hohlkugeln gebildet.

Die Faserverbunde hoher Dimensionsstabilität, Bewitterungsresistenz und Flammfestigkeit werden erfindungsgemäss nach einem Verfahren hergestellt, bei dem die Faserverbunde mit semiinterpenetrierender Netzwerkstruktur, bestehend aus
a) 60 bis 95 Masse% Faserstoffen und/oder Holzpartikeln,
b) 5 bis 40 Masse% hydrophobierten Melaminharzen,
c) gegebenenfalls 1 bis 15 Masse% nichthydrophobierten Melaminharzen, und
d) gegebenenfalls 1 bis 30 Masse% Füllstoffen
durch ein Mehrstufenverfahren erzeugt werden, wobei
- in der ersten Verfahrensstufe Faserstoffe und/oder Holzpartikel in einem kontinuierlichen Durchlauftrockner, gegebenenfalls unter Zusatz von 5 bis 40 Masse%, bezogen auf die Faserstoffe und/oder Holzpartikel, einer wässrigen Dispersion von Melaminharz-Nanopartikeln und/oder Füllstoffen mit einem Feststoffanteil von 60 bis 90 Masse%, bei Temperaturen von 80 bis 180°C und Verweilzeiten von 5 bis 50 min auf einen Restwassergehalt von 0,5 bis 5 Masse% getrocknet werden,
- in der zweiten Verfahrensstufe die getrockneten und gegebenenfalls mit Melaminharz-Nanopartikeln und/oder Füllstoffen modifizierten Faserstoffe und/oder Holzpartikel in einem kontinuierlichen beheizbaren Durchlaufmischer bei 20 bis 60°C und einer Verweilzeit von 6 bis 40 min einer Sorption von 8 bis 90 Masse%, bezogen auf die Faserstoffe und/oder Holzpartikel, einer nichtwässrigen ammoniakalischen Dispersion bzw. Lösung eines hydrophobierten Melaminharzvorkondensats mit einem Feststoffanteil von 20 bis 80 Masse% an modifizierten Melaminharzvorkondensaten mit Molmassen-Zahlenmitteln von 200 bis 5000, die zusätzlich 5 bis 50 Masse%, bezogen auf die modifizierten Melaminharzvorkondensate, gekoppelte Blöcke aus Polyacrylaten oder modifizierten Maleinsäureanhydridcopolymeren oder ungesättigten Polyestern oder Polyetherurethanen enthalten, unterzogen werden, wobei bei der Sorption 0,05 bis 2,0 Masse%, bezogen auf die hydrophobierten Melaminharzvorkondensate, latente Härter für Verarbeitungstemperaturen oberhalb 130°C zugesetzt worden sind, und die Reaktionsmischung nach Erwärmung auf Temperaturen unterhalb 100°C und einer Verweilzeit von 5 bis 20 min unter Abtrennung der flüchtigen Komponenten vacuumentgast und als Strang oder Rohfolie ausgetragen und auf Raumtemperatur abgekühlt wird,
- in der dritten Verfahrensstufe entweder die als Strang ausgetragene und granulierte Reaktionsmischung einer Extrusionsverarbeitung zu Halbzeugen oder einer Spritzgussverarbeitung zu Formstoffen bei Verarbeitungstemperaturen bis 200°C unter Aushärtung des Faserverbunds, oder die als Rohfolie ausgetragene Reaktionsmischung einer Nachverarbeitung durch Pressen oder Kalandrieren bei Verarbeitungstemperaturen bis 180°C unter Aushärtung des Faserverbunds, unterzogen wird.

Bevorzugt enthalten die nichtwässrigen ammoniakalischen Dispersionen bzw. Lösungen von hydrophobierten Melaminharzvorkondensaten als Dispersionsmittel bzw. Lösungsmittel C₁-C₄-Alkohole mit einem Gehalt an Ammoniak von 1 bis 20 Masse%.

Die Dosierung der nichtwässrigen ammoniakalischen Dispersion bzw. Lösung des hydrophobierten Melaminharzvorkondensats in den kontinuierlichen Durchlaufmischer in der zweiten Verfahrensstufe erfolgt bevorzugt aus einem Vorratsbehälter, dem eine Duroplastprepolymersynthesestation vorgelagert ist.

Bevorzugt besitzen die in der zweiten Verfahrensstufe eingesetzten Vorkondensate von Melaminharzen ein Verhältnis Melamin/Formaldehyd von 1 : 1,5 bis 1: 4, besonders bevorzugt 1 : 2,2 bis 1 : 2,8.

Die in der zweiten Verfahrensstufe gegebenenfalls eingesetzten nichthydrophobierten Melaminharz-Vorkondensate werden durch Polykondensation von Melamin mit Formaldehyd und/oder Mischungen aus 20 bis 99,9 Masse% Melamin und 0,1 bis 80 Masse% Melaminderivaten und/oder Triazinderivaten, gegebenenfalls unter Zusatz von 0,1 bis 10 Masse%, bezogen auf die Summe von Melamin, Melaminderivaten und Triazinderivaten, an Phenolen, mit 30% bis 40% wässrigem Formaldehyd in Kondensationsrührkesseln bei 60 bis 100°C hergestellt.

Bei den in der zweiten Verfahrensstufe bei der Herstellung der Faserverbunde eingesetzten modifizierten Melaminharzvorkondensate mit gekoppelten Blöcke an modifizierten Maleinsäureanhydridcopolymeren bestehen die Blöcke bevorzugt aus Maleinsäureanhydrid-Styren-Copolymeren, die mit Poly-C₁-C₄-alkylenoxiden, C₄-C₁₈-Alkylaminen und/oder C₄-C₁₈-hydroxyalkylaminen modifiziert sind.

Die in der zweiten Verfahrensstufe bei der Herstellung der Faserverbunde eingesetzten modifizierten Melaminharzvorkondensate mit gekoppelten Blöcken aus Polyacrylaten, modifizierten Maleinsäureanhydridcopolymeren und/oder Polyetherurethanen sind modifizierte Melaminharzvorkoridensate, die durch
a) Umsetzung von funktionelle Gruppen enthaltenden Polyacrylaten, Polymethacrylaten, modifizierten Maleinsäureanhydridcopolymeren, ungesättigten Polyestem oder Polyetherurethanen mit Melaminharzvorkondensaten, oder
b) radikalische Polymerisation von Monomermischungen aus Acrylsäure-C₁-C₁₂-alkylestern, Acrylsäure-C₁-C₁₂-hydroxyalkylestern, Acrylsäureestem von mehrwertigen Alkoholen vom Typ Butandioldiacrylat, Acrylamid, Methacrylsäure-C₁-C₁₂-alkylestern, Methacrylsäure-C₁-C₁₂-hydroalkylestern, Methacrylsäureestern von mehrwertigen Alkoholen vom Typ Butandioldimethacrylat, Methacrylamid, Styren, C₁-C₄-Alkylstyrenen, Divinylbenzen, Maleinsäurehalbamiden, und/oder Maleinsäurehalbestem in Gegenwart von Melaminharzvorkondensaten, oder
c) Synthese der Melaminharzvorkondensate in Gegenwart funktionelle Gruppen enthaltender Polyacrylate, Polymethacrylate, modifizierter Maleinsäureanhydridcopolymerer, ungesättigter Polyester oder Polyetherurethane,
hergestellt worden sind, wobei in den Melaminharzvorkondensaten 20 bis 100 mol% der Methylolgruppen durch Umsetzung mit C₁- bis C₄-aliphatischen Alkoholen, Polyalkylenoxiden mit Molmassen von 500 bis 2500 und/oder C₅-C₁₂-(Meth)acrylsäurehydroxyalkylestern veräthert und/oder durch Umsetzung mit ungesättigten Säureamiden vom Typ Acrylamid oder Methacrylamid modifiziert sein können.

Bei der Variante a) der Herstellung der modifizierten Metaminharzvorkondensate mit gekoppelten Blöcken aus Polyacrylaten, modifizierten Maleinsäureanhydridcopolymeren, ungesättigten Polyestem und/oder Polyetherurethanen durch Umsetzung von funktionelle Gruppen enthaltenden Polyacrylaten, Polymethacrylaten, modifizierten Maleinsäureanhydridcopolymeren, ungesättigten Polyestern oder Polyetherurethanen mit Melaminharzvorkondensaten werden die modifizierten Melaminharzvorkondensate bevorzugt durch Umsetzung von veretherten Melaminharzen, die als mikrodisperse wässrige Dispersion mit einem Feststoffanteil von 50 bis 90 Gew.% vorliegen, mit den funktionelle Gruppen enthaltenden Polyacrylaten, Polymethacrylaten, modifizierten Maleinsäureanhydridcopolymeren, ungesättigten Polyestem oder Polyetherurethanen hergestellt, wobei die Zugabe der funktionelle Gruppen enthaltenden Polyacrylate, Polymethacrylate, modifizierten Maleinsäureanhydridcopolymeren, ungesättigten Polyester oder Polyetherurethane vor oder während der Herstellung der mikrodispersen wässrigen Dispersionen erfolgt. Dabei ist es von Vorteil, Hochgeschwindigkeitsdispergatoren bei der Synthese der modifizierten Maleinsäureanhydridcopolymeren einzusetzen.

Bei der Variante b) der Herstellung der modifizierten Melaminharzvorkondensate mit gekoppelten Blöcken aus Poly(meth)acrylaten durch radikalische Polymerisation von Monomermischungen aus Acrylsäure-C₁-C₁₂-alkylestern, Acrylsäure-C₁-C₁₂-hydroxyalkylestern, Acrylsäureestern von mehrwertigen Alkoholen vom Typ Butandioldiacrylat, Acrylamid, Methacrylsäure-C₁-C₁₂-alkylestern, Methacrylsäure-C₁-C₁₂-hydroxyalkylestern, Methacrylamid, Methacrylsäureestern von mehrwertigen Alkoholen vom Typ Butandioldimethacrylat, Styren, C₁-C₄-Alkylstyrenen, Divinylbenzen, Maleinsäurehalbamiden und/oder Maleinsäurehalbestem in Gegenwart von Melaminharzvorkondensaten werden die modifizierten Melaminharzvorkondensate mit gekoppelten Blöcken aus Polyacrylaten bevorzugt durch Umsetzung von Melaminharzvorkondensaten, die als mikrodisperse wässrige Dispersion mit einem Feststoffanteil von 50 bis 90 Gew.% vorliegen, mit den Monomermischungen in Gegenwart von thermisch zerfallenden, in organischen Lösungsmitteln löslichen Radikalbildnem, unter intensiver Durchmischung bei 75 bis 120°C, bevorzugt 80 bis 100°C, hergestellt, wobei der Anteil der (Meth)acrylsäure-C₁-C₁₂-hydroxyalkylester und/oder von (Meth)acrylamid in der Monomermischung 2 bis 10 Masse%, bevorzugt 3 bis 5 Masse%, beträgt.

Die in der zweiten Verfahrensstufe zugesetzten latenten Härter für Verarbeitungstemperaturen oberhalb 130°C sind bevorzugt Salze, die bei erhöhter Temperatur Säurekomponenten abspalten, Ester, die bei erhöhter Temperatur unter Freisetzung von Säurekomponenten hydrolysieren, und/oder Thiohamstoff. Geeignete Salze sind Ammoniumsalze, insbesondere Ammoniumperoxidisulfat, Ammoniumphosphat, Ammoniumsulfat, Ammoniumchlorid, Ammoniumoxalat und/oder Ammoniumrhodanid; C₁-C₄-Alkylammoniumsalze von Carbonsäuren, insbesondere Methylammoniumphthalat, Methylammoniummaleinat und/oder das Methylaminsalz der Naphthalinsulfonsäure. Geeignete Ester sind Ester der Phosphorsäure, phosphorigen Säure, Oxalsäure und/oder Phthalsäure, insbesondere Diethylphosphat, Oxalsäuredimethylester und/oder Phthalsäuredimethylester.

Die in der dritten Verfahrensstufe zur Verarbeitung der granulierten Reaktionsmischung aus Faserstoffen und/oder Holzpartikeln, hydrophobierten Melaminharzen und gegebenenfalls nichthydrophobierten Melaminharzen und/oder Füllstoffen eingesetzten kontinuierlichen Kneter sind insbesondere Doppelschneckenextruder mit UD 32 bis 48 oder Einschneckenextruder mit Plungerschnecke, die mit Vacuumentgasung und Werkzeugen zur Ausformung von Platten, Profilen oder Rohren ausgerüstet sind. Günstige Verarbeitungstemperaturen liegen im Bereich von 140 bis 200°C.

Für die Verarbeitung von Rohfolien aus der Reaktionsmischung durch Pressen oder Kalandrieren sind Verarbeitungstemperaturen im Bereich von 140 bis 180°C geeignet.

Die erfindungsgemässen Faserverbunde sind insbesondere als hochbeanspruchte Holzerzeugnisse und geformte Holzhalbzeuge Form von Platten, Profilen, Hohlprofilen und Rohren mit geringer Wasseraufnahme, hoher Dimensionsstabilität, Bewitterungsresistenz und Flammfestigkeit in der Möbelindustrie, in der Fahrzeugindustrie und für Anwendungen im Bauwesen, bevorzugt für Fassadenelemenete, geeignet.

Die Erfindung wird durch nachfolgende Beispiele erläutert:

### Beispiel 1

### a) Herstellung der Melaminharz-Nanopartikel

In einem 50 Liter - Rührreaktor werden 35 kg 30% wässrige Formalinlösung, 12 kg Melamin und 2,5 kg Harnstoff eingetragen und bei 75°C unter Rühren innerhalb 40 min bei pH=7 kondensiert. Die wässrige Harzlösung wird innerhalb 4 min in einen zweiten 200 Liter - Rührreaktor mit Turborührer (40 mls) überführt, in dem sich eine feinteilige gerührte Dispersion aus 85 Liter Wasser, 4,5 kg Natriumhydrogenphosphat und 35 Liter Trichlorfluorpropan, die auf 30°C gehalten wird, befindet. Nach einer Reaktionszeit von 30 min wird die Dispersion aus dem zweiten Rührreaktor in ein 400-Liter Rührgefäss überführt und mit 150 Liter Wasser verdünnt. Die Melaminharz-Nanopartikel werden in einer Filterzentrifuge abgetrennt und in einem Umlufttrockenschrank 6 Std. bei 125°C getrocknet.

### b) Herstellung des hydrophobierten Melaminharzes

In einem 150 Liter - Rührreaktor mit Rückflusskühler, Azeotropabscheider und Hochgeschwindigkeitsdispergator werden 35 kg 30% wässrige Formalinlösung, 12 kg Melamin und 2,5 kg Harnstoff eingetragen, mit Natronlauge auf pH=7,0 eingestellt und bei 75°C unter Rühren innerhalb 40 min kondensiert, und in den Rührreaktor nach Temperaturerhöhung auf 85°C innerhalb von 5,5 Std. 15 kg einer Mischung aus 8 Mol Styren, 18 Mol Butylmethacrylat, 12 Mol Ethylmethacrylat, 1 Mol Acrylamid und 1 Mol β-Hydroxyethylmethacrylat, die 0,5 Masse% Dibenzoylperoxid enthält, zugesetzt, und der Reaktionsansatz weiterhin 1 Std. bei 85°C gerührt. Zu der Reaktionsmischung werden 80 kg Butanol zugesetzt und ein Butanol-Wasser-Azeotrop abdestilliert, und das Butanol nach der Phasentrennung in den Reaktionsansatz solange zurückgeführt, bis die gesamte Wassermenge aus dem Reaktionsansatz übergetrieben ist. Nun wird durch Abdestillation von Butanol der Reaktionsansatz auf ein Volumen von rd. 65 Liter eingeengt.

### c) Herstellung des Faserverbunds

In einen kontinuierlichen Durchlauftrockner mit Begasungs- und Entgasungsstutzen, der mit Stickstoff, der in einem Dampf-beheizten Wärmetauscher auf 120°C vorgewärmt ist, gespült wird, werden Kiefemholzpartikel aus forstwirstschaftlichen Abfällen, die mittels einer Hobelmühle mit Siebeinrichtung auf einen mittleren Partikeldurchmesser von 3,5 mm feinzerkleinert wurden, über eine Dosierbandwaage mit 0,8 kg/h, und Kiefemholzfasem (max. Länge 4mm, mittlerer Durchmesser 0,08 mm) mit 2,4 kg/h, dosiert Die Manteltemperatur am Eingang des Durchlauftrockners beträgt 150°C. Über einen Dosierstutzen wird mit 0,25 kg/h eine 70% wässrige Dispersion von nach a) hergestellten Melaminharz-Nanopartikeln in Form von Mikrohohlkugeln in den Durchlauftrockner dosiert. Die Verweilzeit der Holzpartikel im Durchlauftrockner beträgt 22 min. Eine aus dem Entgasungsstutzen gezogene Analysenprobe besitzt einen Restwassergehalt von 2,5 Masse%.

Die getrocknete Mischung aus Kiefernholzpartikeln und Kiefemholzfasem wird mit 3,2 kg/h über eine Zellenradschleuse in einen beheizbaren kontinuierlichen Durchlaufmischer mit Sprüheinrichtung für flüssige Medien und Entgasungsstutzen (Manteltemperatur 65°C) überführt. Über den Dosierstutzen wird mit 1,28 kg/h der nach b) hergestellte Reaktionsansatz des hydrophobierten Melaminharzes (Feststoffanteil rd. 51 Masse%, enthält zusätzlich 8 Masse% Ammoniak und 1,5 Masse% Ammoniumperoxidisulfat) in den kontinuierlichen Durchlaufmischer dosiert. Nach einer Verweilzeit im Durchlaufmischer von 40 min wird ausgetragen, abgekühlt und granuliert.

Die granulierte Reaktionsmischung aus Kiefernholzpartikeln und Kiefernholzfasern, die das sorbierte hydrophobierte Melaminharz und die Melaminharz-Nanopartikel enthält, wird über eine Zellenradschleuse in einen Wemer & Pfleiderer - Doppelschneckenextruder ZSK 30, L/D= 42, mit Vacuumentgasung und Plattenwerkzeug, Temperaturprofil 120/135/155/170/170/180/170/190/180°C, überführt, bei einer Verweilzeit von 9 min homogenisiert, umgesetzt, vacuumentgast, und als Rechteckprofil 10 × 4 mm auf ein Transportband ausgetragen.

Durch Ausfräsen hergestellte Prüfkörper besitzen einen Elastizitätsmodul von 3200 N/mm² und eine Zugfestigkeit von 280 N/mm².

Zur Prüfung der Dauerhaftigkeit (Pilzresistenz) wurden aus dem Faserverbund 20 Prüfkörper 50 x 10 x 4 mm hergestellt, nach EN 84 ausgewaschen, bei 105°C bis zur Gewichtskonstanz getrocknet und mit dem Pilzstamm Coriolus versicolor beimpft. Nach 4 Monaten Lagerung bei 22°C und 65% rel. Feuchte wurde bei 105°C bis zur Gewichtskonstanz getrocknet. Der mittlere Masseverlust betrug 4,5%.

### Beispiel 2

### a) Herstellung des hydrophobierten Melaminharzes

In einem 200 Liter - Rührreaktor mit Azeotropabscheider, Rückflusskühler und Hochgeschwindigkeitsdispergator werden 40 kg 30% wässrige Formalinlösung und 12,6 kg Melamin eingetragen, mit NaOH auf ph=7,1 eingestellt und innerhalb 40 min bei 80°C kondensiert. Nach Abkühlung auf 70°C werden 68 Liter Methanol zugegeben, mit 68 g Oxalsäure schwach angesäuert, 35 min am Rückfluss gekocht und das überschüssige Methanol als Azeotrop abdestilliert. Anschliessend werden zu dem veretherten Melaminharz 50 kg einer 50% wässrigen Lösung eines Dodecylamin-modifizierten Maleinsäureanhydrid-Styren-Copolymeren (Molmasse Mₙ= 2500, Molverhältnis Styren-Maleinsäureanhydrid 1: 1) in den Rührreaktor eingetragen und 1 Std. bei 85°C gerührt. Nach Zusatz von 60 kg Butanol wird zum Sieden erhitzt und aus der Reaktionsmischung wird ein Butanol-Wasser-Azeotrop abdestilliert, und das Butanol nach der Phasentrennung in den Reaktionsansatz solange zurückgeführt, bis die gesamte Wassermenge aus dem Reaktionsansatz übergetrieben ist. Dann wird durch Abdestillation von Butanol der Reaktionsansatz auf ein Volumen von rd. 95 Liter eingeengt und unter Rühren auf Raumtemperatur abgekühlt.

### b) Herstellung des Faserverbunds

In einen kontinuierlichen Durchlauftrockner mit Begasungs- und Entgasungsstutzen, der mit Stickstoff, der in einem Dampf-beheizten Wärmetauscher auf 120°C vorgewärmt ist, gespült wird, werden Polyamidfasem (⌀ ca. 0,04 mm, l= 3-6 mm) mit 3,5 kg/h dosiert. Die Manteltemperatur am Eingang des Durchlauftrockners beträgt 120°C und am Ausgang des Durchlauftrockners 75°C. Die Verweilzeit der Polyamidfasern im Durchlauftrockner beträgt 12 min. Eine aus dem Entgasungsstutzen gezogene Analysenprobe besitzt einen Restwassergehalt von 0,9 Masse%.

Die getrockneten Polyamidfasem werden mit 3,5 kg/h über eine Zellenradschleuse in einen beheizbaren kontinuierlichen Durchlaufmischer mit Sprüheinrichtung für flüssige Medien und Entgasungsstutzen (Manteltemperatur 55/70/85°C) überführt. Über den Dosierstutzen wird mit 1,1 kg/h der nach b) hergestellte Reaktionsansatz des hydrophobierten Melaminharzes mit einem Feststoffanteil von rd. 53 Masse%, der zusätzlich 8 Masse% Ammoniak und 1,5 Masse% Diethylphosphat enthält, in den kontinuierlichen Durchlaufmischer dosiert. Nach einer Verweilzeit im Durchlaufmischer von 55 min wird die Mischung durch ein Breitschlitzwerkzeug als Rohfolie einer Dicke von rd. 1 mm ausgetragen und auf Raumtemperatur abgekühlt.

In einer Plattenpresse, die auf 170°C vorgeheizt ist, werden 5 Lagen der Rohfolie eingelegt, nach Zufahren der Presse 8 min bei einem Pressdruck von 2 bar erwärmt und bei 40 bar/10 min zu einer 4mm-Platte verpresst und ausgehärtet.

Durch Ausfräsen hergestellte Prüfkörper besitzen einen Elastizitätsmodul von 9000 N/mm² und eine Zugfestigkeit von 750 N/mm². Die Prüfung der Flammfestigkeit ergibt selbstverlöschende Eigenschaften mit einem LOI-Wert von 43.

## Patentansprüche

1. Faserverbunde hoher Dimensionsstabilität, Bewitterungsresistenz und Flammfestigkeit, **dadurch gekennzeichnet, dass** die Faserverbunde mit semiinterpenetrierender Netzwerkstruktur aus
a) 60 bis 95 Masse% Faserstoffen und/oder Holzpartikeln,
b) 5 bis 40 Masse% hydrophobierten Melaminharzen,
c) gegebenenfalls 1 bis 15 Masse% nichthydrophobierten Melaminharzen, und
d) gegebenenfalls 1 bis 30 Masse% Füllstoffen
bestehen und nach einem Verfahren hergestellt worden sind, bei dem
- in der ersten Verfahrensstufe Faserstoffe und/oder Holzpartikel, gegebenenfalls unter Zusatz von 5 bis 40 Masse%, bezogen auf die Faserstoffe und/oder Holzpartikel, einer wässrigen Dispersion von Melaminharz-Nanopartikeln und/oder Füllstoffen mit einem Feststoffanteil von 60 bis 90 Masse%, auf einen Restwassergehalt von 0,5 bis 5 Masse% getrocknet worden sind,
- in der zweiten Verfahrensstufe die getrockneten und gegebenenfalls mit Melaminharz-Nanopartikeln und/oder Füllstoffen modifizierten Faserstoffe und/oder Holzpartikel einer Sorption von 8 bis 90 Masse%, bezogen auf die Faserstoffe und/oder Holzpartikel, einer nichtwässrigen ammoniakalischen Dispersion bzw. Lösung eines hydrophobierten Melaminharzvorkondensats mit einem Feststoffanteil von 20 bis 80 Masse% an modifizierten Melaminharzvorkondensaten mit Molmassen-Zahlenmitteln von 200 bis 5000, die zusätzlich 5 bis 50 Masse%, bezogen auf die modifizierten Melaminharzvorkondensate, gekoppelte Blöcke aus Polyacrylaten oder modifizierten Maleinsäureanhydridcopolymeren oder ungesättigten Polyestem oder Polyetherurethanen enthalten, unterzogen wurden, wobei bei der Sorption 0,05 bis 2,0 Masse%, bezogen auf die hydrophobierten Melaminharzvorkondensate, latente Härter für Verarbeitungstemperaturen oberhalb 130°C zugesetzt worden sind, und die plastische Reaktionsmischung nach Entgasung der flüchtigen Komponenten bei Temperaturen unterhalb 100°C als Strang oder Rohfolie ausgetragen und auf Raumtemperatur abgekühlt worden ist,
- in der dritten Verfahrensstufe entweder die als Strang ausgetragene und granulierte Reaktionsmischung einer Extrusionsverarbeitung zu Halbzeugen oder einer Spritzgussverarbeitung zu Formstoffen bei Verarbeitungstemperaturen bis 200°C unter Aushärtung des Faserverbunds, oder die als Rohfolie ausgetragene Reaktionsmischung einer Nachverarbeitung durch Pressen oder Kalandrieren bei Verarbeitungstemperaturen bis 180°C unter Aushärtung des Faserverbunds, unterzogen worden ist.

2. Faserverbunde nach Anspruch 1, **dadurch gekennzeichnet, dass** die Faserstoffe native Faserstoffe, bevorzugt Holzfasem, Kokosnussfasem, Papierfasem, Viscosefasem sowie Fasern aus Baumwolle, Flachs, Hanf, Jute und/oder Kenaf, anorganische Faserstoffe, bevorzugt Basaltfasern, Glasfasern, Magnesiumoxysulfatfasern und/oder Stahlfasern, und/oder Synthesefasem, bevorzugt Kohlenstofffasem sowie Fasern aus flüssigkristallinen Polymeren, Melamin-Formaldehyd-Harzen, Polyamiden, Polyimiden, Polyacrylnitril, Polyethylenterephthalat, Poly(methylsilylsesquioxan), Polypropylen, Polytetrafluorethylen Polyurethan, Polyvinylalkohol und/oder syndiotaktisches Polystyren, sind.

3. Faserverbunde nach Anspruch 1 oder 2, **dadurch gekennzeichnet, dass** die hydrophobierten Melaminharze Melamin-Formaldehyd-Harze, Melamin-Phenol-Formaldehyd-Harze und/oder Melamin-Hamstoff-Formaldehyd-Harze sind, bei denen 20 bis 100 mol% der Methylolgruppen durch Umsetzung mit C₁- bis C₄-aliphatischen Alkoholen, Polyalkylenoxiden mit Molmassen von 500 bis 2500 und/oder C₅-C₁₂-(Meth)acrylsäurehydroxyalkylestern veräthert und/oder durch Umsetzung mit ungesättigten Säureamiden vom Typ Acrylamid oder Methacrylamid modifiziert worden sind, und wobei die modifizierten Melaminharze einer Umsetzung mit modifizierten Maleinsäureanhydridcopolymeren, ungesättigten Polyestern, Polyetherurethanen oder Polyacrylaten zugrundeliegenden Acrylatmonomermischungen, unterzogen worden sind.

4. Faserverbunde nach einem oder mehreren der Ansprüche 1 bis 3, **dadurch gekennzeichnet, dass** die hydrophobierten und/oder nichthydrophobierten Melaminharze einkondensierte Mono- und/oder Diester der Phosphorsäure bzw. phosphorigen Säure und/oder Ammoniumpolyphosphate enthalten.

5. Faserverbunde nach einem oder mehreren der Ansprüche 1 bis 4 , **dadurch gekennzeichnet, dass** die Melaminharz-Nanopartikel aus hydrophobierten und/oder nichthydrophobierten Melaminharzen bestehen, wobei die Nanopartikeldispersionen nach einem Verfahren hergestellt worden sind, bei dem wässrige Lösungen von Melaminharzvorkondensaten, gegebenenfalls unter hoher Scherwirkung, in eine Emulgator-freie wässrige Lösung, die saure Katalysatoren, und gegebenenfalls dispergierte flüchtige Kohlenwasserstoffe, Fluorkohlenwasserstoffe, Inertgase und/oder anorganische Carbonate enthält, eingetragen werden, und das Reaktionsgemisch nachfolgend verdünnt und ausgetragen wird.

6. Faserverbunde nach einem oder mehreren der Ansprüche 1 bis 5, **dadurch gekennzeichnet, dass** die Füllstoffe nanoskalige Füllstoffe mit Partikelgrössen von 1 bis 100 nm, bevorzugt quellbare Füllstoffe vom Typ hydrophile synthetische Kieselsäuren, Calciumcarbonat, Calciummetasilikate, Schichtsilikate vom Typ Montmorillonit und/oder Metalloxide wie ZnO, SnO, Al₂O₃ oder TiO₂, besonders bevorzugt in Form von Melaminharzvorkondensatmodifizierten quellbaren Füllstoffen, sind.

7. Verfahren zur Herstellung von Faserverbunden hoher Dimensionsstabilität, Bewitterungsresistenz und Flammfestigkeit, **dadurch gekennzeichnet, dass** die Faserverbunde mit semiinterpenetrierender Netzwerkstruktur, die aus
a) 60 bis 95 Masse% Faserstoffen und/oder Holzpartikeln,
b) 5 bis 40 Masse% hydrophobierten Melaminharzen,
c) gegebenenfalls 1 bis 15 Masse% nichthydrophobierten Melaminharzen, und
d) gegebenenfalls 1 bis 30 Masse% Füllstoffen
bestehen, nach einem Mehrstufenverfahren hergestellt werden, bei dem
- in der ersten Verfahrensstufe Faserstoffe und/oder Holzpartikel in einem kontinuierlichen Durchlauftrockner, gegebenenfalls unter Zusatz von 5 bis 40 Masse%, bezogen auf die Faserstoffe und/oder Holzpartikel, einer wässrigen Dispersion von Melaminharz-Nanopartikeln und/oder Füllstoffen mit einem Feststoffanteil von 60 bis 90 Masse%, bei Temperaturen von 80 bis 180°C und Verweilzeiten von 5 bis 50 min auf einen Restwassergehalt von 0,5 bis 5 Masse% getrocknet werden,
- in der zweiten Verfahrensstufe die getrockneten und gegebenenfalls mit Melaminharz-Nanopartikeln und/oder Füllstoffen modifizierten Faserstoffe und/oder Holzpartikel in einem kontinuierlichen beheizbaren Durchlaufmischer bei 20 bis 60°C und einer Verweilzeit von 6 bis 40 min einer Sorption von 8 bis 90 Masse%, bezogen auf die Faserstoffe und/oder Holzpartikel, einer nichtwässrigen ammoniakalischen Dispersion bzw. Lösung eines hydrophobierten Melaminharzvorkondensats mit einem Feststoffanteil von 20 bis 80 Masse% an modifizierten Melaminharzvorkondensaten mit Molmassen-Zahlenmitteln von 200 bis 5000, die zusätzlich 5 bis 50 Masse%, bezogen auf die modifizierten Melaminharzvorkondensate, gekoppelte Blöcke aus Polyacrylaten oder modifizierten Maleinsäureanhydridcopolymeren oder ungesättigten Polyestern oder Polyetherurethanen enthalten, unterzogen werden, wobei bei der Sorption 0,05 bis 2,0 Masse%, bezogen auf die hydrophobierten Melaminharnrorkondensate, latente Härter für Verarbeitungstemperaturen oberhalb 130°C zugesetzt worden sind, und die Reaktionsmischung nach Erwärmung auf Temperaturen unterhalb 100°C und einer Verweilzeit von 5 bis 20 min unter Abtrennung der flüchtigen Komponenten vacuumentgast und als Strang oder Rohfolie ausgetragen und auf Raumtemperatur abgekühlt wird,
- in der dritten Verfahrensstufe entweder die als Strang ausgetragene und granulierte Reaktionsmischung einer Extrusionsverarbeitung zu Halbzeugen oder einer Spritzgussverarbeitung zu Formstoffen bei Verarbeitungstemperaturen bis 200°C unter Aushärtung des Faserverbunds, oder die als Rohfolie ausgetragene Reaktionsmischung einer Nachverarbeitung durch Pressen oder Kalandrieren bei Verarbeitungstemperaturen bis 180°C unter Aushärtung des Faserverbunds, unterzogen wird.

8. Verfahren zur Herstellung von Faserverbunden nach Anspruch 7, **dadurch gekennzeichnet, dass** die nichtwässrigen ammoniakalischen Dispersionen bzw. Lösungen von hydrophobierten Metaminharzvorkondensaten als Dispersionsmittel bzw. Lösungsmittel C₁-C₄-Alkohole mit einem Gehalt an Ammoniak von 1 bis 20 Masse% enthalten.

9. Verfahren zur Herstellung von Faserverbunden nach Anspruch 7 oder 8, **dadurch gekennzeichnet, dass** die Vorkondensate von Melaminharzen ein Verhältnis Melamin/Formaldehyd von 1 : 1,5 bis 1: 4, bevorzugt 1 : 2,2 bis 1 : 2,8, besitzen.

10. Verfahren zur Herstellung von Faserverbunden nach einem oder mehreren der Ansprüche 7 bis 9 , **dadurch gekennzeichnet, dass** die an die modifizierten Metaminharzvorkondensate gekoppelten Blöcke an modifizierten Maleinsäureanhydridcopolymeren aus Maleinsäureanhydrid-Styren-Copolymeren bestehen, die mit Poly-C₁-C₄-alkylenoxiden, bevorzugt Aminoendgruppen-enthaltenden Poly-C₁-C₄-alkylenoxiden und/oder C₄-C₁₈-Alkylaminen modifiziert sind.

11. Verfahren zur Herstellung von Faserverbunden nach einem oder mehreren der Ansprüche 7 bis 10, **dadurch gekennzeichnet, dass** die modifizierten Melaminharzvorkondensate mit gekoppelten Blöcken aus Polyacrylaten, modifizierten Maleinsäureanhydridcopolymeren, ungesättigten Polyestern und/oder Polyetherurethanen Melaminharzvorkondensate sind, die durch
a) Umsetzung von funktionelle Gruppen enthaltenden Polyacrylaten, Polymethacrylaten, modifizierten Maleinsäureanhydridcopolymeren, ungesättigten Polyestem oder Polyetherurethanen mit Melaminharzvorkondensaten, oder
b) radikalische Polymerisation von Monomermischungen aus Acrylsäure-C₁-C₁₂-alkylestern, Acrylsäure-C₁-C₁₂-hydroxyalkylestern, Acrylsäureestern von mehrwertigen Alkoholen vom Typ Butandioldiacrylat, Acrylamid, Methacrylsäure-C₁-C₁₂-alkylestern, Methacrylsäure-C₁-C₁₂-hydroxyalkylestem, Methacrylamid, Methacrylsäureestem von mehrwertigen Alkoholen vom Typ Butandioldimethacrylat, Styren, C₁-C₄-Alkylstyrenen, Divinylbenzen, Maleinsäurehalbamiden, und/oder Maleinsäurehalbestern in Gegenwart von Melaminharzvorkondensaten, oder
c) Synthese der Melaminharzvorkondensate in Gegenwart funktionelle Gruppen enthaltender Polyacrylate, Polymethacrylate, modifizierter Maleinsäureanhydridcopolymerer, ungesättigter Polyester oder Polyetherurethane,
hergestellt worden sind, wobei in den Melaminharzvorkondensaten 20 bis 100 mol% der Methylolgruppen durch Umsetzung mit C₁- bis C₄-aliphatischen Alkoholen, Polyalkylenoxiden mit Molmassen von 500 bis 2500 und/oder C₅-C₁₂-(Meth)acrylsäurehydroxyalkylestem veräthert und/oder durch Umsetzung mit ungesättigten Säureamiden vom Typ Acrylamid oder Methacrylamid modifiziert sein können.

12. Verfahren zur Herstellung von Faserverbunden nach Anspruch 11, **dadurch gekennzeichnet, dass** die durch Umsetzung von funktionelle Gruppen enthaltenden Polyacrylaten, Polymethacrylaten, modifizierten Maleinsäureanhydridcopolymeren, ungesättigten Polyestern oder Polyetherurethanen mit Melaminharzvorkondensaten hergestellten modifizierten Melaminharzvorkondensate mit gekoppelten Blöcken aus Polyacrylaten, modifizierten Maleinsäureanhydridcopolymeren, ungesättigten Polyestern und/oder Polyetherurethanen Melaminharzvorkondensate sind, die durch Umsetzung von veretherten Melaminharzen, die als mikrodisperse wässrige Dispersion mit einem Feststoffanteil von 50 bis 90 Gew.% vorliegen, mit den funktionelle Gruppen enthaltenden Polyacrylaten, Polymethacrylaten, modifizierten Maleinsäureanhydridcopolymeren, ungesättigten Polyestern oder Polyetherurethanen hergestellt werden, wobei die Zugabe der funktionelle Gruppen enthaltenden Polyacrylate, Polymethacrylate, modifizierten Maleinsäureanhydridcopolymeren, ungesättigten Polyester oder Polyetherurethane vor oder während der Herstellung der mikrodispersen wässrigen Dispersionen erfolgt.

13. Verfahren zur Herstellung von Faserverbunden nach Anspruch 11, **dadurch gekennzeichnet, dass** die durch radikalische Polymerisation von Monomermischungen aus Acrylsäure-C₁-C₁₂alkylestern, Acrylsäure-C₁-C₁₂-hydroxyalkylestern, Acrylsäureestern von mehrwertigen Alkoholen vom Typ Butandioldiacrylat, Acrylamid, Methacrylsäure-C₁-C₁₂-alkylestern, Methacrylsäure-C₁-C₁₂-hydroxyalkylestern, Methacrylamid, Methacrylsäureestern von mehrwertigen Alkoholen vom Typ Butandioldimethacrylat, Styren, C₁-C₄-Alkylstyrenen, Divinylbenzen, Maleinsäurehalbamiden und/oder Maleinsäurehalbestem in Gegenwart von Melaminharzvorkondensaten hergestellten modifizierten Melaminharzvorkondensate mit gekoppelten Blöcken aus Polyacrylaten Melaminharzvorkondensate sind, die durch Umsetzung von Melaminharzvorkondensaten, die als mikrodisperse wässrige Dispersion mit einem Feststoffanteil von 50 bis 90 Gew.% vorliegen, mit den Monomermischungen in Gegenwart von thermisch zerfallenden, in organischen Lösungsmitteln löslichen Radikalbildnern, unter intensiver Durchmischung bei 75 bis 120°C, bevorzugt 80 bis 100°C, hergestellt werden, wobei der Anteil der (Meth)acrylsäure-C₁-C₁₂-hydroxyalkylester und/oder von (Meth)acrylamid in der Monomermischung 2 bis 10 Masse%, bevorzugt 3 bis 5 Masse%, beträgt.

14. Verfahren zur Herstellung von Faserverbunden nach einem oder mehreren der Ansprüche 7 bis 13, **dadurch gekennzeichnet, dass** die latenten Härter für Verarbeitungstemperaturen oberhalb 130°C Ammoniumsalze, bevorzugt Ammoniumperoxidisulfat, Ammoniumphosphat, Ammoniumsulfat, Ammoniumchlorid, Ammoniumoxalat und/oder Ammoniumrhodanid; C₁-C₄-Alkylammoniumsalze von Carbonsäuren, bevorzugt Methylammoniumphthalat, Methylammoniummaleinat und/oder das Methylaminsalz der Naphthalinsulfonsäure; Ester der Phosphorsäure, phosphorigen Säure, Oxalsäure und/oder Phthalsäure, bevorzugt Diethylphosphat, Oxalsäuredimethylester und/oder Phthalsäuredimethylester, und/oder Thiohamstoff sind.

15. Verwendung von Faserverbunden nach einem oder mehreren der Ansprüche 1 bis 5 für hochbeanspruchte Holzerzeugnisse und geformte Holzhalbzeuge Form von Platten, Profilen, Hohlprofilen und Rohren mit geringer Wasseraufnahme, hoher Dimensionsstabilität, Bewitterungsresistenz und Flammfestigkeit, bevorzugt in der Möbelindustrie, im Fahrzeugbau und für Anwendungen im Bauwesen, insbesondere für Fassadenelemente.

## Claims

1. Fibre composites of high dimensional stability, weathering resistance and flame resistance, **characterized in that** the fibre composites have a semi-interpenetrating network structure and consist of
a) 60 to 95 mass% of fibre materials and/or wood particles,
b) 5 to 40 mass% of hydrophobicized melaminic resins,
c) if appropriate 1 to 15 mass% of non-hydrophobicized melaminic resins, and
d) if appropriate 1 to 30 mass% of fillers
and have been produced by a process comprising
- a first stage of fibre materials and/or wood particles with or without addition of 5 to 40 mass%, based on the fibre materials and/or wood particles, of an aqueous dispersion of melamine resin nanoparticles and/or fillers having a solids fraction of 60 to 90 mass%, having been dried to a residual water content of 0.5 to 5 mass%,
- a second stage of the fibre materials and/or wood particles which have been dried and if appropriate modified with melamine resin nanoparticles and/or fillers having been subjected to a sorption of 8 to 90 mass%, based on the fibre materials and/or wood particles, of a non-aqueous ammoniacal dispersion or solution of a hydrophobicized melaminic resin precondensate having a solids fraction of 20 to 80 mass% with regard to modified melaminic resin precondensates having molar mass number averages of 200 to 5000, which additionally contain 5 to 50 mass%, based on the modified melaminic resin precondensates, of coupled blocks of polyacrylates or modified maleic anhydride copolymers or unsaturated polyesters or polyetherurethanes, the sorption being carried out in the presence of 0.05 to 2.0 mass%, based on the hydrophobicized melaminic resin precondensates, of added latent curing agents for processing temperatures above 130°C, and the plastically deformable reaction mixture, at temperatures below 100°C, being devolatilized, discharged as a strand or foil and cooled down to room temperature,
- a third stage of either the strand-discharged and granulated reaction mixture having been subjected to extrusion processing into intermediate articles or to injection-moulded processing into moulded materials at processing temperatures up to 200°C with curing of the fibre composite, or the foil-discharged reaction mixture having been subjected to postprocessing by pressing or calendering at processing temperatures up to 180°C with curing of the fibre composite.

2. Fibre composites according to Claim 1, **characterized in that** the fibre materials are native fibrous materials, preferably wood fibres, coconut fibres, paper fibres, viscose fibres, and also fibres of cotton, flax, hemp, jute and/or kenaf, inorganic fibrous materials, preferably basalt fibres, glass fibres, magnesium oxysulphate fibres and/or steel fibres, and/or synthetic fibres, preferably carbon fibres and also fibres of liquid-crystalline polymers, melamine-formaldehyde resins, polyamides, polyimides, polyacrylonitrile, polyethylene terephthalate, poly(methylsilylsesquioxane), polypropylene, polytetrafluoroethylene, polyurethane, polyvinyl alcohol and/or syndiotactic polystyrene.

3. Fibre composites according to Claim 1 or 2, **characterized in that** the hydrophobicized melaminic resins are melamine-formaldehyde resins, melamine-phenyl-formaldehyde resins and/or melamine-urea-formaldehyde resins where in each of which 20 to 100 mol% of the methylol groups have been etherified by reaction with C₁- to C₄-aliphatic alcohols, polyalkylene oxides having molar masses of 500 to 2500 and/or C₅-C₁₂ hydroxyalkyl (meth)acrylates and/or modified by reaction with unsaturated acid amides of the acrylamide or methacrylamide type, and wherein the modified melaminic resins have been subjected to a reaction with modified maleic anhydride copolymers, unsaturated polyesters, polyetherurethanes or acrylate monomer mixtures underlying polyacrylates.

4. Fibre composites according to one or more of Claims 1 to 3, **characterized in that** the hydrophobicized and/or non-hydrophobicized melaminic resins contain intercondensed mono- and/or diesters of phosphoric acid or of phosphorous acid and/or ammonium polyphosphates.

5. Fibre composites according to one or more of Claims 1 to 4, **characterized in that** the melamine resin nanoparticles consist of hydrophobicized and/or non-hydrophobicized melaminic resins, the nanoparticle dispersions having been produced by a process wherein aqueous solutions of melamine resin precondensates are, with or without high shearing, introduced into an emulsifier-free aqueous solution which contains acidic catalysts and if appropriate dispersed volatile hydrocarbons, fluorocarbons, inert gases and/or inorganic carbonates, and the reaction mixture is subsequently diluted and discharged.

6. Fibre composites according to one or more of Claims 1 to 5, **characterized in that** the fillers are nanoscale fillers having particle sizes of 1 to 100 nm, preferably swellable fillers selected from hydrophilic synthetic silicas, calcium carbonate, calcium metasilicates, sheet-silicates of the montmorillonite type and/or metal oxides such as ZnO, SnO, Al₂O₃ or TiO₂ and more preferably in the form of melamine resin precondensate modified swellable fillers.

7. Process for producing fibre composites of high dimensional stability, weathering resistance and flame resistance, **characterized in that** the fibre composites have a semi-interpenetrating network structure and consist of
a) 60 to 95 mass% of fibre materials and/or wood particles,
b) 5 to 40 mass% of hydrophobicized melaminic resins,
c) if appropriate 1 to 15 mass% of non-hydrophobicized melaminic resins, and
d) if appropriate 1 to 30 mass% of fillers
and are produced by a multistage process comprising
- a first stage of fibre materials and/or wood particles, in a continuous-flow dryer; with or without addition of 5 to 40 mass%, based on the fibre materials and/or wood particles, of an aqueous dispersion of melamine resin nanoparticles and/or fillers having a solids fraction of 60 to 90 mass%, at temperatures of 80 to 180°C in the course of residence times of 5 to 50 min, being dried to a residual water content of 0.5 to 5 mass%,
- a second stage of the fibre materials and/or wood particles which are dried and if appropriate modified with melamine resin nanoparticles and/or fillers in a heatable continuous-flow mixer at 20 to 60°C and in the course of a residence time of 6 to 40 min being subjected to a sorption of 8 to 90 mass%, based on the fibre materials and/or wood particles, of a non-aqueous ammoniacal dispersion or solution of a hydrophobicized melaminic resin precondensate having a solids fraction of 20 to 80 mass% with regard to modified melaminic resin precondensates having molar mass number averages of 200 to 5000, which additionally contain 5 to 50 mass%, based on the modified melaminic resin precondensates, of coupled blocks of polyacrylates or modified maleic anhydride copolymers or unsaturated polyesters or polyetherurethanes, the sorption being carried out in the presence of 0.05 to 2.0 mass%, based on the hydrophobicized melaminic resin precondensates, of added latent curing agents for processing temperatures above 130°C, and the reaction mixture, after being heated to temperatures below 100°C and after a residence time of 5 to 20 min, being devolatilized, discharged as a strand or foil and cooled down to room temperature,
- a third stage of either the strand-discharged and granulated reaction mixture being subjected to extrusion processing into intermediate articles or to injection-moulded processing into moulded materials at processing temperatures up to 200°C with curing of the fibre composite, or the foil-discharged reaction mixture being subjected to postprocessing by pressing or calendering at processing temperatures up to 180°C with curing of the fibre composite.

8. Process for producing fibre composites according to Claim 7, **characterized in that** the non-aqueous ammoniacal dispersions or solutions of hydrophobicized melaminic resin precondensates contain C₁-C₄ alcohols having an ammonia content of 1 to 20 mass% as dispersion medium or solvent respectively.

9. Process for producing fibre composites according to Claim 7 or 8, **characterized in that** the precondensates of melaminic resins possess a melamine/formaldehyde ratio of 1:1.5 to 1:4 and preferably in the range from 1:2.2 to 1:2.8.

10. Process for producing fibre composites according to one or more of Claims 7 to 9, **characterized in that** the modified maleic anhydride copolymer blocks coupled to the modified melaminic resin precondensates consist of maleic anhydride-styrene copolymers modified by poly-C₁-C₄-alkylene oxides, preferably amino-terminated poly-C₁-C₄-alkylene oxides and/or C₉-C₁₈-alkylamines.

11. Process for producing fibre composites according to one or more of Claims 7 to 10, **characterized in that** the modified melaminic resin precondensates comprising coupled blocks of polyacrylates, modified maleic anhydride copolymers, unsaturated polyesters and/or polyetherurethanes are melamine resin precondensates which have been produced by
a) reaction of polyacrylates, polymethacrylates, modified maleic anhydride copolymers, unsaturated polyesters or polyetherurethanes that each contain functional groups with melamine resin precondensates, or
b) free-radical polymerization of monomer mixtures of C₁-C₁₂-alkyl acrylates, C₁-C₁₂-hydroxyalkyl acrylates, acrylic esters of polyhydric alcohols of the butanediol diacrylate type, acrylamide, C₁-C₁₂-alkyl methacrylates, C₁-C₁₂-hydroxyalkyl methacrylates, methacrylamide, methacrylic esters of polyhydric alcohols of the butanediol dimethacrylate type, styrene, C₁-C₄-alkylstyrenes, divinylbenzene, monomaleamides and/or monomaleate esters in the presence of melamine resin precondensates, or
c) synthesis of the melamine resin precondensates in the presence of polyacrylates, polymethacrylates, modified maleic anhydride copolymers, unsaturated polyesters or polyetherurethanes that each contain functional groups,
wherein 20 to 100 mol% of the methylol groups in the melamine resin precondensates may have been etherified by reaction with C₁- to C₄-aliphatic alcohols, polyalkylene oxides having molar masses of 500 to 2000 and/or C₅-C₁₂ hydroxyalkyl (meth)acrylates and/or modified by reaction with unsaturated acid amides of the acrylamide or methacrylamide type.

12. Process for producing fibre composites according to Claim 11, **characterized in that** the modified melaminic resin precondensates comprising coupled blocks of polyacrylates, modified maleic anhydride copolymers, unsaturated polyesters and/or polyetherurethanes, which have been prepared by reaction of polyacrylates, polymethacrylates, modified maleic anhydride copolymers, unsaturated polyesters or polyetherurethanes that each contain functional groups with melamine resin precondensates, are melamine resin precondensates which are prepared by reaction of etherified melaminic resins which are present as a microdisperse aqueous dispersion having a solids fraction of 50 to 90 weight% with polyacrylates, polymethacrylates, modified maleic anhydride copolymers, unsaturated polyesters or polyetherurethanes that each contain functional groups, wherein the addition of the polyacrylates, polymethacrylates, modified maleic anhydride copolymers, unsaturated polyesters or polyetherurethanes that each contain functional groups takes place before or during the production of the microdisperse aqueous dispersions.

13. Process for producing fibre composites according to Claim 11, **characterized in that** the modified melaminic resin precondensates comprising coupled blocks of polyacrylates and prepared by free-radical polymerization of monomer mixtures of C₁-C₁₂-alkyl acrylates, C₁-C₁₂-hydroxyalkyl acrylates, acrylic esters of polyhydric alcohols of the butanediol diacrylate type, acrylamide, C₁-C₁₂-alkyl methacrylates, C₁-C₁₂-hydroxyalkyl methacrylates, methacrylamide, methacrylic esters of polyhydric alcohols of the butanediol dimethacrylate type, styrene, C₁-C₄-alkylstyrenes, divinylbenzene, monomaleamides and/or monomaleate esters in the presence of melamine resin precondensates are melamine resin precondensates which are prepared by reaction of melamine resin precondensates which are present as a microdisperse aqueous dispersion having a solids fraction of 50 to 90 weight% with the monomer mixtures in the presence of free-radical formers which disintegrate thermally and are soluble in organic solvents, by intensive through-mixing at 75 to 120°C and preferably 80 to 100°C, wherein the fraction of the C₁-C₁₂-hydroxyalkyl (meth)acrylates and/or of methacrylamide in the monomer mixture is 2 to 10 mass% and preferably 3 to 5 mass%.

14. Process for producing fibre composites according to one or more of Claims 7 to 13, **characterized in that** the latent curing agents for processing temperatures above 130°C are ammonium salts, preferably ammonium peroxodisulphate, ammonium phosphate, ammonium sulphate, ammonium chloride, ammonium oxalate and/or ammonium thiocyanate; C₁-C₄-alkylammonium salts of carboxylic acids, preferably methylammonium phthalate, methylammonium maleate and /or the methylamine salt of naphthalenesulphonic acid; esters of phosphoric acid, phosphorous acid, oxalic acid and/or phthalic acid, preferably diethyl phosphate, dimethyl oxalate and/or dimethyl phthalate, and/or thiourea.

15. Use of fibre composites according to one or more of Claims 1 to 5 for highly stressed articles of wood and shaped intermediate articles of wood in the form of panels, sections, hollow profiles and tubes of low water imbibition, high dimensional stability, weathering resistance and flame resistance, preferably in the furniture industry, in motor vehicle construction and for applications in building construction, especially for exterior elements.

## Revendications

1. Composites fibreux présentant une stabilité dimensionnelle, une résistance aux intempéries et une résistance aux flammes élevées, **caractérisés en ce que** les composites fibreux sont constitués, avec une structure de réseau semi-interpénétrant, par
a) 60 à 95% en masse de matériaux fibreux et/ou de particules de bois,
b) 5 à 40% en masse de résines de mélamine hydrofugées,
c) le cas échéant 1 à 15% en masse de résines de mélamine non hydrofugées et
d) le cas échéant 1 à 30% en masse de charges
et sont préparés selon un procédé, dans lequel
- dans une première étape de procédé, les matériaux fibreux et/ou les particules de bois, le cas échéant avec addition de 5 à 40% en masse, par rapport aux matériaux fibreux et/ou aux particules de bois, d'une dispersion aqueuse de nanoparticules de résine de mélamine et/ou de charges présentant une teneur en solides de 60 à 90% en masse, sont séchés jusqu'à une teneur résiduelle en eau de 0,5 à 5% en masse,
- dans une deuxième étape de procédé, les matériaux fibreux et/ou les particules de bois séchés et le cas échéant modifiés par des nanoparticules de résine de mélamine et/ou des charges sont soumis à une absorption de 8 à 90% en masse, par rapport aux matériaux fibreux et/ou aux particules de bois, d'une dispersion ou d'une solution non aqueuse ammoniacale d'un précondensat d'une résine de mélamine hydrofugée, présentant une proportion de solides de 20 à 80% en masse de précondensats d'une résine de mélamine modifiée présentant une masse molaire numérique moyenne de 200 à 5000, qui contiennent en outre 5 à 50% en masse, par rapport aux précondensats d'une résine de mélamine modifiée, de blocs couplés de polyacrylates ou de copolymères modifiés de l'anhydride de l'acide maléique ou de polyesters insaturés ou de polyétheruréthanes, en ajoutant lors de l'absorption 0,05 à 2,0% en masse, par rapport aux précondensats d'une résine de mélamine hydrofugée, de durcisseur latent pour des températures de transformation supérieures à 130°C, et le mélange réactionnel plastique est évacué, après dégazage des composants volatils, à des températures inférieures à 100°C sous forme de brin ou de feuille brute, et refroidi à température ambiante,
- dans une troisième étape de procédé, le mélange réactionnel évacué sous forme de brin et granulé est soumis à une transformation par extrusion en semi-produits ou à une transformation par moulage par injection en des produits moulés à des températures de transformation jusqu'à 200°C avec durcissement du composite fibreux ou le mélange réactionnel évacué sous forme de feuille brute est soumis à un traitement ultérieur par compression ou calandrage à des températures de transformation jusqu'à 180°C avec durcissement du composite fibreux.

2. Composites fibreux selon la revendication 1, **caractérisés en ce que** les matériaux fibreux sont des matériaux fibreux naturels, de préférence des fibres de bois, des fibres de noix de coco, des fibres de papier, des fibres de viscose ainsi que des fibres de coton, de lin, de chanvre, de jute et/ou de kénaf, des matériaux fibreux inorganiques, de préférence des fibres de basalte, des fibres de verre, des fibres d'oxysulfate de magnésium et/ou des fibres d'acier et/ou des fibres de synthèse, de préférence des fibres de carbone ainsi que des fibres de polymères à cristaux liquides, de résines de mélamine-formaldéhyde, de polyamides, de polyimides, de polyacrylonitrile, de poly(téréphtalate d'éthylène), de poly(méthylsilylsesquioxane), de polypropylène, de polytétrafluoroéthylène, de polyuréthane, de poly(alcool vinylique) et/ou de polystyrène syndiotactique.

3. Composites fibreux selon la revendication 1 ou 2, **caractérisés en ce que** les résines de mélamine hydrofugées sont des résines de mélamine-formaldéhyde, des résines de mélamine-phénol-formaldéhyde et/ou des résines de mélamine-urée-formaldéhyde, dans lesquelles 20 à 100% en mole des groupes méthylol ont été éthérifiés par transformation avec des alcools aliphatiques en C₁ à C₄, des poly(oxydes d'alkylène) présentant des masses molaires de 500 à 2500 et/ou des esters hydroxyalkyliques de l'acide (méth)acrylique en C₅ à C₁₂ et/ou modifiés par transformation avec des amides d'acides insaturés du type acrylamide ou méthacrylamide et les résines de mélamine modifiées étant soumises à une transformation avec des copolymères modifiés d'anhydride de l'acide maléique, des polyesters insaturés ou de polyuréthanes ou de mélanges de monomères d'acrylate à la base de polyacrylates.

4. Composites fibreux selon l'une ou plusieurs des revendications 1 à 3, **caractérisés en ce que** les résines de mélamine hydrofugées et/ou non hydrofugées contiennent, sous forme co-condensée, des monoesters et/ou des diesters de l'acide phosphorique ou phosphoreux et/ou des polyphosphates d'ammonium.

5. Composites fibreux selon l'une ou plusieurs des revendications 1 à 4, **caractérisés en ce que** les nanoparticules de résine de mélamine sont constituées de résines de mélamine hydrofugées et/ou non hydrofugées, les dispersions des nanoparticules étant préparées selon un procédé dans lequel des solutions aqueuses de précondensats de résine de mélamine sont introduites, le cas échéant sous un cisaillement élevé, dans une solution aqueuse exempte d'émulsifiants qui contient des catalyseurs acides, et le cas échéant des hydrocarbures, des hydrocarbures fluorés dispersés, volatils, des gaz inertes et/ou des carbonates inorganiques et le mélange réactionnel étant ensuite dilué et évacué.

6. Composites fibreux selon l'une ou plusieurs des revendications 1 à 5, **caractérisés en ce que** les charges sont des charges d'une taille à l'échelle du nanomètre, présentant des grosseurs de particules de 1 à 100 nm, de préférence des charges gonflables du type silices synthétiques hydrophiles, carbonate de calcium, métasilicates de calcium, silicates à couches du type montmorillonite et/ou oxydes de métal tels que ZnO, SnO, Al₂O₃ ou TiO₂, de manière particulièrement préférée sous forme de charges gonflables modifiées par des précondensats de résine de mélamine.

7. Procédé pour la préparation de composites fibreux de stabilité dimensionnelle, de résistance aux intempéries et de résistance aux flammes élevées, **caractérisé en ce que** les composites fibreux, avec une structure de réseau semi-interpénétrant, constitués par
a) 60 à 95% en masse de matériaux fibreux et/ou de particules de bois,
b) 5 à 40% en masse de résines de mélamine hydrofugées,
c) le cas échéant 1 à 15% en masse de résines de mélamine non hydrofugées et
d) le cas échéant 1 à 30% en masse de charges
sont fabriqués selon un procédé à plusieurs étapes, dans lequel
- dans la première étape de procédé, les matériaux fibreux et/ou les particules de bois sont séchés dans un sécheur continu, le cas échéant avec addition de 5 à 40% en masse, par rapport aux matériaux fibreux et/ou aux particules de bois, d'une dispersion aqueuse de nanoparticules de résine de mélamine et/ou de charges présentant une teneur en solides de 60 à 90% en masse, à des températures de 80 à 180°C et des temps de séjour de 5 à 50 min jusqu'à une teneur résiduelle en eau de 0,5 à 5% en masse,
- dans la deuxième étape de procédé, les matériaux fibreux et/ou les particules de bois séchés et le cas échéant modifiés par des nanoparticules de résine de mélamine et/ou des charges sont soumis, dans un mélangeur continu, pouvant être chauffé, à 20 jusqu'à 60°C et un temps de séjour de 6 à 40 minutes, à une absorption de 8 à 90% en masse, par rapport aux matériaux fibreux et/ou aux particules de bois, d'une dispersion ou d'une solution non aqueuse ammoniacale d'un précondensat d'une résine de mélamine hydrofugée présentant une proportion de solides de 20 à 80% en masse de précondensats d'une résine de mélamine modifiée présentant une masse molaire numérique moyenne de 200 à 5000, qui contiennent en outre 5 à 50% en masse, par rapport aux précondensats d'une résine de mélamine modifiée, de blocs couplés de polyacrylates ou de copolymères modifiés de l'anhydride de l'acide maléique ou de polyesters insaturés ou de polyétheruréthanes, en ajoutant lors de l'absorption 0,05 à 2,0% en masse, par rapport aux précondensats de résine d'une mélamine hydrofugée, de durcisseur latent pour des températures de transformation supérieures à 130°C, et le mélange réactionnel, après chauffage à des températures inférieures à 100°C et pendant un temps de séjour de 5 à 20 minutes, est dégazé avec séparation des composants volatils et est évacué sous forme de brin ou de feuille brute, et refroidi à température ambiante,
- dans la troisième étape de procédé, le mélange réactionnel évacué sous forme de brin et granulé est soumis à une transformation par extrusion en semi-produits ou à une transformation par moulage par injection en des produits moulés à des températures de transformation jusqu'à 200°C avec durcissement du composite fibreux ou le mélange réactionnel évacué sous forme de feuille brute est soumis à un traitement ultérieur par compression ou calandrage à des températures de transformation jusqu'à 180°C avec durcissement du composite fibreux.

8. Procédé pour la fabrication de composites fibreux selon la revendication 7, **caractérisé en ce que** les dispersions ou solutions non aqueuses, ammoniacales de précondensats d'une résine de mélamine hydrofugée contiennent comme dispersants ou solvants des alcools en C₁ à C₄ avec une teneur en ammoniaque de 1 à 20% en masse.

9. Procédé pour la fabrication de composites fibreux selon la revendication 7 ou 8, **caractérisé en ce que** les précondensats de résines de mélamine présentent un rapport mélamine/formaldéhyde de 1:1,5 à 1: 4, de préférence de 1 : 2,2 à 1 : 2,8.

10. Procédé pour la fabrication de composites fibreux selon l'une ou plusieurs des revendications 7 à 9, **caractérisé en ce que** les blocs de copolymères modifiés d'anhydride d'acide maléique, couplés sur les précondensats d'une résine de mélamine modifiée, sont constitués par des copolymères d'anhydride de l'acide maléique-styrène, qui sont modifiés par des poly(oxydes d'alkylène en C₁ à C₄), de préférence des poly(oxydes d'alkylène en C₁ à C₄) contenant des groupes amino terminaux et/ou des alkylamines en C₄ à C₁₈.

11. Procédé pour la fabrication de composites fibreux selon l'une ou plusieurs des revendications 7 à 10, **caractérisé en ce que** les précondensats d'une résine de mélamine modifiée sont des précondensats d'une résine de mélamine avec des blocs couplés de polyacrylates, de copolymères modifiés d'anhydride de l'acide maléique, de polyesters insaturés et/ou de polyétheruréthanes, qui ont été préparés par
a) transformation de polyacrylates, de polyméthacrylates contenant des groupes fonctionnels, de copolymères modifiés d'anhydride de l'acide maléique, de polyesters insaturés ou de polyétheruréthanes avec des précondensats d'une résine de mélamine, ou
b) polymérisation radicalaire de mélanges de monomères constitués par des esters alkyliques en C₁ à C₁₂ de l'acide acrylique, des esters hydroxyalkyliques en C₁ à C₁₂ de l'acide acrylique, des esters de l'acide acrylique d'alcools polyvalents du type diacrylate de butanediol, l'acrylamide, des esters alkyliques en C₁ à C₁₂ de l'acide méthacrylique, des esters hydroxyalkyliques en C₁ à C₁₂ de l'acide méthacrylique, le méthacrylamide, des esters de l'acide méthacrylique d'alcools polyvalents du type diméthacrylate de butanediol, le styrène, des (alkyle en C₁ à C₄)styrènes, le divinylbenzène, des semi-acides de l'acide maléique et/ou des semi-esters de l'acide malique en présence de précondensats d'une résine de mélamine, ou
c) synthèse des précondensats d'une résine de mélamine en présence de polyacrylates, de polyméthacrylates contenant des groupes fonctionnels, de copolymères modifiés d'anhydride de l'acide maléique, de polyesters insaturés ou de polyétheruréthanes,
où 20 à 100% en mole des groupes méthylol dans les précondensats d'une résine de mélamine peuvent être éthérifiés par transformation avec des alcools aliphatiques en C₁ à C₄, des poly(oxydes d'alkylène) présentant des masses molaires de 500 à 2500 et/ou des esters hydroxyalkyliques de l'acide (méth)acrylique en C₅ à C₁₂ et/ou modifiés par transformation avec des amides d'acides insaturés du type acrylamide ou méthacrylamide.

12. Procédé pour la fabrication de composites fibreux selon la revendication 11, **caractérisé en ce que** les précondensats d'une résine de mélamine modifiée avec des blocs couplés de polyacrylates, de copolymères modifiés d'anhydride de l'acide maléique, de polyesters insaturés et/ou de polyétheruréthanes obtenus par transformation de polyacrylates, de polyméthacrylates contenant des groupes fonctionnels, de copolymères modifiés d'anhydride de l'acide maléique, de polyesters ou de polyétheruréthanes modifiés avec des précondensats d'une résine de mélamine, sont des précondensats d'une résine de mélamine qui sont obtenus par transformation de résines de mélamine éthérifiées, qui se trouvent sous forme de dispersion aqueuse microdispersée présentant une proportion de solides de 50 à 90% en poids, avec les polyacrylates, les polyméthacrylates contenant des groupes fonctionnels, les copolymères modifiés d'anhydride de l'acide maléique, les polyesters insaturés ou les polyétheruréthanes, l'addition des polyacrylates, des polyméthacrylates contenant des groupes fonctionnels, des copolymères modifiés d'anhydride de l'acide maléique, des polyesters insaturés ou des polyétheruréthanes ayant lieu avant ou pendant la préparation des dispersions aqueuses microdispersées.

13. Procédé pour la fabrication de composites fibreux selon la revendication 11, **caractérisé en ce que** les précondensats d'une résine de mélamine modifiée avec des blocs couplés de polyacrylates, préparés par polymérisation radicalaire de mélanges de monomères d'esters alkyliques en C₁ à C₁₂ de l'acide acrylique, d'esters hydroxyalkyliques en C₁ à C₁₂ de l'acide acrylique, d'esters de l'acide acrylique d'alcools polyvalents du type diacrylate de butanediol, d'acrylamide, d'esters alkyliques en C₁ à C₁₂ de l'acide méthacrylique, d'esters hydroxyalkyliques en C₁ à C₁₂ de l'acide méthacrylique, de méthacrylamide, d'esters de l'acide méthacrylique d'alcools polyvalents du type diméthacrylate de butanediol, de styrène, d'(alkyle en C₁ à C₄)styrènes, de divinylbenzène, de semi-acides de l'acide maléique et/ou de semi-esters de l'acide maléique en présence de précondensats d'une résine de mélamine sont des précondensats d'une résine de mélamine, qui sont préparés par transformation de précondensats de résine de mélamine qui se trouvent sous forme de dispersion aqueuse microdispersée présentant une proportion de solides de 50 à 90% en poids, avec les mélanges de monomères en présence d'agents de formation de radicaux qui se décomposent thermiquement, solubles dans des solvants organiques, avec mélange intensif à 75 jusqu'à 120°C, de préférence de 80 à 100°C, la proportion de l'ester hydroxyalkylique en C₁ à C₁₂ de l'acide (méth)acrylique et/ou de (méth)acrylamide dans le mélange de monomères étant de 2 à 10% en masse, de préférence de 3 à 5% en masse.

14. Procédé pour la fabrication de composites fibreux selon l'une ou plusieurs des revendications 7 à 13, **caractérisé en ce que** les durcisseurs latents pour des températures de transformation supérieures à 130°C sont des sels d'ammonium, de préférence le peroxodisulfate d'ammonium, le phosphate d'ammonium, le sulfate d'ammonium, le chlorure d'ammonium, l'oxalate d'ammonium et/ou le thiocyanate d'ammonium ; des sels d'alkylammonium en C₁ à C₄ d'acides carboxyliques, de préférence le phtalate de méthylammonium, le maléinate de méthylammonium et/ou le sel de méthylamine de l'acide naphtalènesulfonique ; des esters de l'acide phosphorique, de l'acide phosphoreux, de l'acide oxalique et/ou de l'acide phtalique, de préférence le phosphate de diéthyle, l'ester diméthylique de l'acide oxalique et/ou l'ester diméthylique de l'acide phtalique et/ou la thiourée.

15. Utilisation de composites fibreux selon l'une ou plusieurs des revendications 1 à 5 pour des produits en bois fortement sollicités et des semi-produits façonnés sous forme de plaques, de profilés, de profilés creux et de tuyaux présentant une faible absorption d'eau, une stabilité dimensionnelle, résistance aux intempéries et résistance aux flammes élevées, de préférence dans l'industrie des meubles, dans la construction de véhicules et pour des utilisations dans la construction, en particulier pour des éléments de façades.
